(19) **Europäisches Patentamt / European Patent Office / Office européen des brevets**

(11) **EP 1 911 812 B1**

(12) **EUROPEAN PATENT SPECIFICATION**

(45) Date of publication and mention
of the grant of the patent:
**21.11.2012 Bulletin 2012/47**

(51) Int Cl.:
*C09B 69/10* (2006.01)   *C08J 5/18* (2006.01)
*C08J 7/02* (2006.01)   *G02B 5/30* (2006.01)

(21) Application number: **06768237.7**

(22) Date of filing: **14.07.2006**

(86) International application number:
**PCT/JP2006/314077**

(87) International publication number:
**WO 2007/010861 (25.01.2007 Gazette 2007/04)**

(54) **PROCESS FOR PRODUCING MELANIN, MELANIN PRODUCED BY THE PROCESS, FUNCTIONAL FILM CONTAINING THE MELANIN, AND PROCESS FOR PRODUCING THE SAME**

VERFAHREN ZUR HERSTELLUNG VON MELANIN, DANACH HERGESTELLTES MELANIN, DAS MELANIN ENTHALTENDER FUNKTIONELLER FILM SOWIE VERFAHREN ZU DESSEN HERSTELLUNG

PROCÉDÉ DE PRODUCTION DE MÉLANINE, MÉLANINE PRODUITE PAR LE PROCÉDÉ, FILM FONCTIONNEL CONTENANT LA MÉLANINE, ET PROCÉDÉ DE PRODUCTION DU FILM

(84) Designated Contracting States:
**AT BE BG CH CY CZ DE DK EE ES FI FR GB GR HU IE IS IT LI LT LU LV MC NL PL PT RO SE SI SK TR**

(30) Priority: **15.07.2005 JP 2005207001**
**15.07.2005 JP 2005207002**

(43) Date of publication of application:
**16.04.2008 Bulletin 2008/16**

(73) Proprietor: **MGC Filsheet Co., Ltd.**
**Tokorozawa-city, Saitama 359-1164 (JP)**

(72) Inventors:
• **KAWAI, Ryozo,**
**c/o MGC Filsheet Co., Ltd.**
**Tokorozawa-city,**
**Saitama 359-1164 (JP)**

• **TAKAKUWA, Kyohei,**
**c/o MGC Filsheet Co., Ltd.**
**Tokorozawa-city,**
**Saitama 359-1164 (JP)**
• **NAMIKI, Masahiko,**
**c/o MGC Filsheet Co., Ltd.**
**Tokorozawa-city,**
**Saitama 359-1164 (JP)**

(74) Representative: **Isarpatent**
**Patent- und Rechtsanwälte**
**Postfach 44 01 51**
**80750 München (DE)**

(56) References cited:
**WO-A1-2005/026216**   **WO-A1-2005/037754**
**JP-A- 08 500 371**   **JP-A- 2002 533 516**

EP 1 911 812 B1

**Description**

[Detailed explanation of the invention]

[Field of the invention]

The present invention relates to a melanin and a method for its production. In particular, it relates to a melanin that is excellent in coloring a functional film, and in reproducibility and stability during storage, and to a method for its production. Also, the invention relates to a functional film containing a melanin and a method for its production. Specifically, it relates to a functional film containing a melanin of which the alteration is improved and which is excellent in the property for protecting eyes from ultraviolet rays, and a method for its production.

[Background of the art]

Melanin exists in many animals and plants. It is known for protecting eyes and skin from oxidation, by absorbing ultraviolet rays. So, it has been expected that this property of a melanin would be utilized to develop a functional film containing a melanin that can protect eyes from ultraviolet rays.
It has been conventionally known that a melanin can be obtained by oxidizing a melanin precursor, such as catechol, etc., in an aqueous solution. (See patent references 1 and 2 below.) It has been known that the produced melanin forms a non-crystalline highly heterogeneous three-dimensional polymer, that its structure cannot be determined, and that the heterogeneity of this product is based on the number of active points in a melanin precursor and a reaction intermediate. (See patent reference 1 below.)

[References]

[Patent reference 1] Official Gazette of Japanese Patent Early-publication (Kokai) No. H08-500371
[Patent reference 2] Official Gazette of Japanese Patent Early-publication *(Kokai)* No. 2002-533516

In the process of WO 2005/026216 a melanin-like precursor is present in an electrolytic cell, whereby oxidising and polymerizing of the said melanin-like precursor is carried out by passing a current through the electrolytic cell.

[Non-patent reference 1] S. Mobelli, et al., The 12th International Conference on Pigment Cells, 1985, pages 69 - 77

[Disclosure of the invention]

[Problem to be solved]

However, the melanins obtained in the references are not products with good reproducibility. So, the functional film containing a melanin produced from this is not good in reproducibility, and is inferior in coloring. Also, every melanin is altered during storage. So, this leads to lower the reproducibility. Further, it was difficult to produce a functional film containing a melanin which is good in reproducibility and good in its properties.
Thus, it has been a problem to produce a homogeneous melanin with good reproducibility. Also, it has been another problem to produce a functional film containing a melanin with good reproducibility.
The present invention was made with considering the above points. The problem to be solved by the present invention is to provide a melanin that is superior in coloring a functional film and to provide the method for producing it. In particular, it is to provide a melanin that can protect eyes from ultraviolet rays and that is superior in coloring a polarizing film formed from a poly(vinyl alcohol) resin containing a dichroic dye and that has reproducibility and stability during storage, and to provide a method for producing it.
Another problem to be solved by the present invention is to provide a functional film containing a melanin and to provide a method for producing it. In particular, it is to provide a functional film containing a melanin of which the alteration is improved and which is excellent in the property for protecting eyes from ultraviolet rays, and a method for its production.

[Means for solving the problem]

It is considered that the cause of heterogeneity of melanins is that there are many active points for a melanin precursor and its intermediate. But, heterogeneity of reaction conditions is one of the big factors. So, the present inventors have eagerly researched the reaction conditions, etc., of a melanin, to solve the above problem. As a result, the inventors found that it is necessary to set up the reaction conditions as homogeneously as possible, to substantially nullify the heterogeneity of the melanin. Thereby the inventors found the conditions for obtaining a substantially homogeneous melanin. In particular, the inventors found that it is possible to correct the alterations of any melanin by maintaining a ratio of the melanin precursor relative to an oxidative agent at a constant level. Based on this finding the inventors completed the invention.

The present inventors also have eagerly researched the conditions, etc., for treating a film for melanin to solve the above problem. As a result they found that the problem can be solved by correcting alterations of the melanin by normalizing and controlling the conditions for treating a film for melanin, and, further, by establishing a step for treating a melanin with water that contains an inorganic salt at the end stage for treating the melanin.

Namely, the method for producing a melanin of the present invention is characterized by producing it under controlled conditions, comprising, at least,

a step for an oxidative reaction wherein a melanin precursor is continuously oxidized while the mole ratio of the melanin precursor relative to the oxidative agent is maintained at a constant ratio, and

a step for precipitation wherein a melanin is precipitated by acidifying a reaction solution after the step for an oxidative reaction.

The melanin precursor is preferably at least one selected from the group consisting of an eumelanin precursor, a pheomelanin precursor, and an allomelanin precursor. The oxidative agent is preferably at least one selected from the group consisting of oxygen allotropes, peroxides, and a peroxoic acid and its salts.

The mole ratio of the melanin precursor relative to the oxidative agent in the oxidative reaction is preferably from 1:0.1 to 1:10. The oxidative reaction is preferably carried out until the amount of the oxidative agent remaining in the reaction becomes 1% or less. Also, the pH of the oxidative reaction is preferably from 7 to 13. The temperature of the oxidative reaction is preferably from 10 to 60 °C.

Further, in the step for precipitation, the melanin is preferably precipitated by acidifying the reaction solution at a pH of 0.5 - 4. Also, the method for producing a melanin of the present invention preferably further comprises a step for purification wherein the melanin is washed with a neutral aqueous solution containing an inorganic salt after the melanin precipitated in the step for precipitation is separated from the reaction solution. The concentration of the inorganic salt in the neutral <u>aqueous</u> solution is preferably 1- 20% by weight. The washing with a neutral aqueous solution is preferably carried out until the solution after washing has a pH of 5 or more. The method preferably further comprises a step for drying the melanin obtained by the step for purification at a temperature of 80 °C or less.

The melanin of the present invention is one produced by the above methods for producing a melanin. The method for storing a melanin of the present invention is characterized by storing the melanin under a shielded light and the melanin being sealed from the air.

A method for producing the functional film of the present invention is characterized by containing a melanin produced by a method for producing a melanin, comprising, at least,

a step for treating the film with an alkaline aqueous solution containing at least the melanin, and

a step for treating the film treated with the alkaline aqueous solution with an aqueous solution containing inorganic salts.

The concentration of the melanin in the alkaline aqueous solution is preferably 0.1 - 6 g/L. The pH of the alkaline aqueous solution is preferably 7 - 10. The alkaline aqueous solution is preferably ammonia-alkaline. The temperature of the alkaline aqueous solution is 10 - 60 °C. The concentration of the inorganic salt is preferably 1-20 g/L.

The inorganic salt is preferably an alkaline metal salt or an alkaline earth metal salt. The alkaline metal salt is preferably at least any one selected from the group consisting of sodium sulfate, potassium sulfate, sodium chloride, potassium chloride, sodium nitrate, potassium nitrate, sodium phosphate, and potassium phosphate. The alkaline earth metal salt is preferably at least any one selected from the group consisting of calcium sulfate, magnesium sulfate, calcium chloride, magnesium chloride, calcium nitrate, magnesium nitrate, calcium phosphate, and magnesium phosphate.

The film is preferably formed from a poly(vinyl alcohol) resin.

The alkaline aqueous solution preferably further contains a dichroic dye. The method preferably may further comprise a step for permeating a dichroic dye in the film. It may comprise a step for further treating the film with a metal compound and boric acid.

The functional film of the present invention is one produced by the above methods for producing a functional film. The optical product of the present invention comprises the functional film. Such an optical product is preferably any one selected from the group consisting of a polarizing lens, a polarizing plate, sunglasses, goggles, glass for an automobile, window glass, and a sun visor.

For one embodiment of the present invention, the film of the present invention is characterized by a functional film containing the melanin of the present invention, wherein the film is 10 - 100 $\mu$m thick, the content of the melanin in the film is 0.1 - 1.5% by weight, and the ratio for cutting UVA is 70% or more and the ratio for cutting UVB is 80% or more.

The film preferably has a polarizing property. The ratio for cutting UVA is 80% or more and the ratio for cutting UVB is 85% or more. Further, its degree of polarization is preferably 90% or more, and the visible light-transmittance is preferably 35% or less.

[Effects of the invention]

By the present invention, the heterogeneity of a melanin can be improved, and a homogeneous melanin can be provided that is superior in coloring a functional film and in reproducibility and stability during storage. Also, a functional film of the present invention can provide an optical product which contains an improved melanin and is superior in the property of protecting eyes from ultraviolet rays.

[Detailed explanation of the invention]

An embodiment of the present invention is explained in the following.

The present invention is a method for producing a homogeneous melanin wherein the melanin is produced under controlled conditions, comprising, at least,
a step for an oxidative reaction wherein a melanin precursor is continuously oxidized while the mole ratio of the melanin precursor relative to an oxidative agent is maintained at a constant ratio and
a step for precipitation wherein a melanin is precipitated by acidifying a reaction solution after the step for the oxidative reaction.

The melanin of the present invention has substantially no heterogeneity This is caused by maintaining the mole ratio of a melanin precursor relative to an oxidative agent at a constant level in an alkaline aqueous solution. It is excellent in coloring a functional film, preferably a polarizing film that is formed from a poly(vinyl alcohol) resin containing a dichroic dye. It is also excellent in reproducibility and stability during its storage.

In the above embodiment, "controlled conditions" mean controlling the conditions for a melanin of the present invention. They are such as where a mole ratio of a melanin precursor relative to an oxidative agent, a pH during a reaction, a temperature, a reaction time, a condition for precipitation, a condition for washing, a condition for drying, etc., are controlled.

In the above method for producing a melanin, an oxidative agent at a constant mole reacts with the many active sites of a melanin precursor and its intermediate by maintaining the mole ratio of a melanin relative to an oxidative agent at a constant level. As a result, it is considered that the homogeneity of the reaction is established. This causes there to be substantially no heterogeneity in the reaction.

For the melanin precursor used for the present invention, various melanins can be used, without any special limitation. Among these, at least one selected from the group of the three melanins that are defined by R. A. Nicolaus, i.e., an eumelanin, a pheomelanin, and an allomelanin precursors, are preferably used. (Please see Melanins, authored by R. A. Nicolaus, 1968, Hermann Publishing.)

For an illustrative example of the melanin precursor, thyrosine, <u>cysteine</u>, a catechol, 1,8-dihydroxynaphthalene, dopamine, DOPA, 5,6-dihydroxyindole, 5,6-dihydroxyindole-2-carboxylic acid, leukodopafrom, triptoamine, serotonin, epinephrine, norepinephrine, adrenochrome, etc., can be listed.

For these precursors, depending on the property of each of them, their reactions are preferably carried out in a state so that they are soluble homogeneously.

For the oxidative agent used for the present invention, various oxidative agents that do not cause a side-reaction or a coordinate reaction, other than an oxidative reaction, can be used, without a special limitation. Among them, preferable are at least any one selected from the group consisting of oxygen allotropes, peroxides and peroxoic acids, and peroxoic acid salts. More specifically, air, oxygen, ozone, hydrogen peroxide, sodium peroxide, ammonium peroxide, etc., are listed.

For the present invention, as high as possible of the homogeneity of a reaction is required. For this purpose, it is characterized by a continuous reaction, in which the main parts of the reaction are carried out while the mole ratio of a melanin precursor relative to an oxidative agent is maintained at a constant level. So, in the present invention, the melanin precursor is continuously oxidized while the above ratio is maintained at a constant level. By this way, the same moles of the oxidative agent continuously react with the many active sites of the melanin precursor and its intermediate. Consequently, the homogeneity of the reaction can be established.

The mole ratio for the reaction of a melanin precursor with an oxidative agent is preferably 1:0.1 - 1:10. More preferably it is 1:0.5 - 1:5 from the viewpoint of controlling the reaction rate. Still more preferably it is 1:0.5 - 1:2 from the viewpoint of controlling the homogeneity of the reaction. Under a mole ratio of less than 1:0.1 for the reaction of a melanin precursor with an oxidative agent, the reaction becomes slow. Under a mole ratio of more than 10, it becomes difficult to control the temperature from the viewpoint of the capacity for cooling a reactor.

To complete the reaction under a homogeneously controlled condition, it is preferable to carry out the reaction until the remaining amount of the oxidative agent in an overflowing reaction solution becomes less than 1% of the amount of the supplied oxidative agent. For this purpose, the reaction conditions, such as a reaction temperature, a reaction pH, a retention time, etc., are set. If necessary, a reaction in a cascade enables the remaining amount of the oxidative agent in the reaction solution of the final stage to be 1% or less of the supplied amount of the oxidative agent. Controlling the reaction temperature and pH, in addition to controlling the mole ratio of a melanin precursor relative to an oxidative agent, results in a substantially homogeneous reaction condition being obtained until the completion of the reaction.

The above cascade is one in which a reaction is carried out continuously and in multiple stages. For example, a melanin precursor and an oxidative agent are continuously supplied at a constant mole ratio. Herein, the reaction product is being continuously discharged by causing it to overflow. The overflow is supplied to the second reactor. In the second reactor, the melanin precursor and oxidative agent remaining further reacts to be continuously discharged by overflowing. If the remaining oxidative agent in the overflowing reaction solution is more than 1% of the oxidative agent supplied to the first reactor, the reaction solution is supplied to the third reactor, to further continue the reaction. After this step, the reaction is also repeated until the remaining oxidative agent in the discharged reaction solution becomes 1% or less of the initial amount.

The pH for the oxidative reaction is preferably 7 - 13. More preferably it has a pH of 7.5 - 11. If the pH is less than 7, a produced melanin possibly precipitates, thereby the homogeneity of the reaction being reduced. If the pH is more than 13, it becomes difficult to control the homogeneity of the reaction. The controlled range of the pH is preferably ±0.5. More preferably it is ±0.2.

The temperature for the oxidative reaction is preferably 10 - 60 °C. More preferably it is 20 - 40 °C. If the temperature is less than 10 °C, the rate of the reaction becomes slower. If it is more than 60 °C, the rate becomes faster, and it becomes difficult to control the homogeneity of the reaction. The controlled range of the temperature is preferably ±0.5 °C. More preferably it is ±0.2 °C.

A melanin can be precipitated by acidifying it in a reaction solution in which the reaction is substantially completed.

In the step for precipitation, the pH for precipitating a melanin is preferably 0.5 - 4. More preferably it is 1 - 3. If the pH is less than 0.5, the amount of precipitate is greater and it becomes difficult to select a material for the reactor. In contrast, if it has a pH above 4, the amount of precipitate is not sufficient.

For an acid used for the step for precipitation, various acids can be used. Among them, at least any one selected from hydrochloric acid, sulfuric acid, phosphoric acid, and nitric acid, can be listed.

The melanin precipitated in the step for precipitation can be separated from a reaction solution containing impurities by general procedures, such as filtration under a reduced pressure, filtration under an increased pressure, centrifugation, etc.

The separated melanin can be purified by washing it with a neutral aqueous solution containing an inorganic salt. The concentration of the inorganic salt used for the washing is preferably 1 - 20% by weight in a neutral aqueous solution. More preferably it is 3 - 12% by weight. If it is less than 1% by weight, a part of a melanin may also be dissolved. If it is more than 20% by weight, the washing effect tends to be lower.

The inorganic salt used for the washing is preferably an alkaline metal salt or an alkaline earth metal salt. More specifically, it is preferably at least any one selected from the group consisting of sodium sulfate, potassium sulfate, sodium chloride, potassium chloride, sodium nitrate, potassium nitrate, sodium phosphate, potassium phosphate, calcium sulfate, magnesium sulfate, calcium chloride, magnesium chloride, calcium nitrate, magnesium nitrate, calcium phosphate, and magnesium phosphate.

The washing with a neutral aqueous solution containing an inorganic salt is preferably carried out until the washing solution after washing reaches a pH of 5 or more. More preferably it is carried out until the solution reaches a pH of 6 or more. This enables separating a melanin from low molecular impurities, etc., and enables producing a melanin which is substantially homogeneous, excellent in coloring a functional film, especially a polarizing film formed from a poly(vinyl alcohol) resin containing a dichroic dye, and excellent in reproducibility and stability during storage.

The obtained melanin can be dried at a temperature of 80 °C or less, preferably 70 °C or less, to avoid alteration during drying. It is further preferable to dry it under a reduced pressure, because then the period for drying can be shortened, and its heat deterioration is thereby decreased.

The melanin after drying is generally stored as an aqueous solution, which is the condition for its use. However, if the melanin is so stored, for several months alterations such as an increase in the viscosity of the aqueous solution or a precipitation of an insoluble material are observed after storage. It is considered that this is because dissolved oxygen, bacteria, etc., in sunlight and an aqueous solution affect a melanin, to cause a change in its quality because of the remaining parts of the active sites of the melanin after reaction, because none of them have been inactivated. Thus, it is preferable to store a melanin for a long period in its solid form under a shielded light and sealed from air.

The melanin of the present invention can be contained in a functional film. Herein, the functional film is referred to as a film, especially with a function for an optical property. For this optical property, various properties, such as a polarizing property, a photochromic property, a property for a shielded light, etc., can be listed. The functional film can be, for example, a polarizing film.

The thickness of the functional film is not particularly limited. For example, it can be 10 - 100 $\mu$m thick.

Also, the melanin of the present invention in the functional film is not particularly limited. It can be, for example, 0.1- 1.5% by weight.

The melanin of the present invention can be further used for an optical product comprising a functional film. For the optical product, a polarizing lens, a polarizing plate, sunglasses, goggles, glass for an automobile, window glass, a sun visor, etc., can be listed.

A method for producing a functional film of the present invention containing the melanin of the present invention is characterized by at least comprising a step for treating a film with an alkaline aqueous solution containing a melanin and a step for treating the film with an aqueous solution containing an inorganic salt, after the treatment with the alkaline aqueous solution. By treatment with the aqueous solution containing an inorganic salt, the functional film of the present invention is improved in the amount of a melanin in it and excellent in its property for protecting eyes.

In the method for producing a functional film, the treatment with an aqueous solution containing an inorganic salt enables the improvement of the changes of the melanin that is contained in the functional film by preventing patches of coloring by a heterogeneous melanin being generated. Namely, the generation of linear color patches based on the heterogeneous melanin can be reduced by the treatment with a solution containing an inorganic salt after the treatment with a melanin.

The film used in the present invention is referred to as a material having a certain shape, but without any limitation of the size, such as a film, a sheet, a substrate, etc. For the film, various resins which are transparent and have hydrophilic groups can be used, without any special limitation. Specifically, for example, poly(vinyl alcohol) resins, cellulose resins, (meth)acrylic acid resins, etc., can be listed. Among these, poly(vinyl alcohol) resins are preferable from the viewpoint of coloring, etc.

For the poly(vinyl alcohol) resins, for example, poly(vinyl alcohol), poly(vinyl formal), poly(vinyl acetal), saponificated poly(ethylene-vinyl acetate) copolymer, etc., can be listed. Among these, poly(vinyl alcohol) is preferable from the viewpoint of a good property for coloring and having excellent optical properties.

For the film used in the present invention, one made of an unmodified poly(vinyl alcohol) resin, etc., can be used. Further, a film made of a poly(vinyl alcohol) resin which contains a dichroic dye and is further treated with a metal compound and boric acid can be used. These methods for production are exemplified in Japanese Patent Publication (*Kokoku*) No. 2663440. It is advantageous that these treatments be carried out in aqueous solutions, so that a continuous treatment with melanin and water containing an inorganic salt can be carried out.

In the step for treating a film in an alkaline aqueous solution, the concentration of the melanin in a vessel for treating it is preferably 0.1 - 6 g/L, from the viewpoint of the degree of polarization and the property for absorbing ultraviolet rays of the film. More preferably it is 0.5 - 2 g/L. If the concentration of a melanin is less than 0.1 g/L, the effect for absorbing ultraviolet rays of the film is not sufficient. If it is more than 6 g/L, the degree of polarization of the functional film decreases.

In the step for treating a film in an alkaline aqueous solution, the pH of a vessel for treating it is preferably 7 - 10. More preferably it is 7.5 - 9. If the pH is less than 7, the melanin possibly precipitates. If it is more than 10, the polarizing film is cured.

In the step for treating a film in an alkaline aqueous solution, the pH in a vessel for treating a melanin is preferably controlled with ammonium hydroxide, from the viewpoint of preventing the curing of the polarizing film.

In the step for treating a film in an alkaline aqueous solution, the temperature in a vessel for treating a melanin is preferably 10 - 60 °C. More preferably it is 25 - 45 °C. If the temperature is lower than 10 °C, the rate for treating the melanin becomes slower. If it is higher than 60 °C, the strength of the functional film decreases.

In the step for treatment in an aqueous solution containing an inorganic salt, preferably 1-20 g/L of the inorganic salt is contained in a vessel for a treatment with water after treating a melanin. More preferably 3-12 g/L of the salt is contained. If the concentration of the inorganic salt is more than 20 g/L, the effect for preventing color patches decreases, and linear color patches remain. If it is less than 1 g/L, the property for absorbing ultraviolet rays of the melanin is weakened and the ratios for cutting UVA rays and UVB rays decrease.

The concentration of an inorganic salt is preferably increased or decreased depending on the property of the melanin. The property of a melanin is estimated by the transmittance that is in the range of 280 - 315 nm (UVB region) and the transmittance that is in the range of 315 - 400 nm (UVA region) of the solution. If the property of the melanin is high, the concentration of the inorganic salt is preferably decreased to less than the normal concentration. If it is low, the concentration is preferably increased to more than the normal concentration. Melanins are heterogeneous, and their structures cannot be determined, so it is difficult to establish what concentration of the inorganic salt is set, depending on the property of the melanin. It is preferable to examine the concentration of the salts by a small-scale experiment, and then to set some conditions.

For the inorganic salt, alkaline metal salts and alkaline earth metal salts are preferable. For these alkaline metal salts, any one or more of sodium sulfate, potassium sulfate, sodium chloride, potassium chloride, sodium nitrate, potassium nitrate, sodium phosphate, and potassium phosphate, can be listed. For these alkaline earth metal salts, calcium sulfate, magnesium sulfate, calcium chloride, magnesium chloride, calcium nitrate, magnesium nitrate, calcium phosphate, and magnesium phosphate can be listed.

In the step for treatment in an aqueous solution containing an inorganic salt, the reaction temperature is preferably 10 - 60 °C, more preferably 25 - 45 °C. At a temperature lower than 10 °C the rate for treatment with an aqueous solution containing an inorganic salt is faster. At a temperature higher than 60 °C the strength of the functional film decreases.

These polarizing films containing a melanin, can, if necessary, be combined with a UV-absorbing agent from the viewpoint of further increasing the effect for absorbing ultraviolet rays.

The functional film of the present invention is one produced by the above method for producing a functional film. The optical product of the present invention includes this functional film. Such an optical product is preferably any one selected from a polarizing lens, a polarizing plate, sunglasses, goggles, a window for an automobile, window glass, and a sun visor.

The functional film of the present invention is also one containing a melanin of the present invention. It is characterized by the film being 10 - 100 $\mu$m thick, the content of a melanin being 0.1 - 1.5% by weight, the ratio for cutting UVA being 70% or more, and the ratio for cutting UVB being 80% or more.

Preferably the functional film has a polarizing property. Preferably the ratio for cutting UVA is 80% or more and the ratio for cutting UVB is 85% or more. Further, the film preferably has a property with a degree of polarization of 90% or more and a ratio of transmitting visible light of 35% or less.

The functional film produced by the method for producing one has the above properties. It may provide an optical product of which the alteration of melanin has been improved and which is excellent in protecting eyes from ultraviolet rays.

[Examples]

The present invention is described in detail in the following Examples, but the invention should not be limited by the descriptions thereof.

The method for evaluation is explained below.

(A) Appearance

The appearance was visually evaluated.

(B) Transmittance

The transmittance was measured using a spectrophotometer, V-550-type (Nihon Bunko Co. Ltd.).

(C) Degree of polarization

The degree of polarization (P%) is calculated by the following formula

$$[\text{Formula 1}] \qquad P\% = \{(H_0 \cdot H_{90})/(H_0 + H_{90})\}^{1/2} \times 100$$

In the above formula, the wording "Parallel Position Transmittance (Ho)" means a transmittance gained when two polarizing plates are piled so that their molecular orienting axes are parallel. The wording "Vertical Position Transmittance ($H_{90}$)" means a transmittance gained when two polarizing plates are piled so that their molecular orienting axes are vertical.

[Example 1]

To a 1-L reactor equipped with a stirrer and an outlet for overflow, 200 g/L of catechol and 500 g/L of sodium persulfate were supplied at a rate of 2.7 mL/min. The pH and the reaction temperature were controlled to be 9.5±0.2 and 36±0.1 °C, respectively, by using 100 g/L of sodium hydroxide. The overflowed reaction solution was adjusted to a pH of 1 by using hydrochloride. The precipitated melanin was filtered and washed with an aqueous solution containing 50 g/L of sodium sulfate, until the pH after washing became 6. The washed melanin was dried at 70 °C for one day. The melanin obtained was dissolved in an aqueous solution of ammonia (pH 8.3), so that the concentration became 1.2 g/L. A polarizing film was immersed in its tense state, i.e., without <u>sag</u>, for three minutes in the melanin solution adjusted to 30 °C. While being maintained in its tense state, the polarizing film was taken out and dried.

The polarizing film above mentioned was manufactured under the method of JP Patent No. 2663440. Specifically, poly(vinyl alcohol) (manufactured by Kurare Co. Ltd., Trade name: Kurare Vinylon #7500) was dyed at 35 °C for three minutes in an aqueous solution containing 0.25 g/L of Chlorantine Fast Red (C.I.28160), 0.18 g/L of Chrysophenine (C.I.24895), 1.0 g/L of Solophenyl Blue 4GL (C.I.34200), and 10 g/L of anhydrous sodium sulfate, and then it was oriented by four-times in the solution. This dyed film was immersed at 35 °C for three minutes in an aqueous solution containing 2.5 g/L of nickel acetate and 6.6 g/L of boric acid. The film was dried at room temperature for three minutes in its tense state, and then heat-treated at 70 °C for three minutes, to obtain a polarizing film. But, it was used for the <u>above</u> experiment without laminating it with polycarbonate.

The polarizing film that was obtained had a good appearance. The degree of polarization was 96.3%. The transmittances for the film in a visible region, the UVA region, and the UVB region, were 20.3%, 9.7%, and 7.4%, respectively.

[Examples 2 and 3]

Under the same conditions as in Example 1, a melanin of the present invention was produced twice, and a polarizing film was made using the melanin (Examples 2 and 3). The results, including Example 1, are given in Table 1. They have good reproducibility.

[Table 1]

Table 1

| Example | Appearance | Degree of polarization (%) | Visible region (%) | UVA (%) | UVB (%) |
|---------|-----------|---------------------------|--------------------|---------|---------|
| 1 | Good | 96.3 | 20.3 | 9.7 | 7.4 |
| 2 | Good | 96.0 | 20.6 | 9.4 | 7.3 |
| 3 | Good | 96.1 | 20.4 | 9.5 | 7.3 |

[Example 4]

A reaction was carried out, except for replacing 200 g/L of catechol with 139 g/L of dopamine (4-(2-aminoethyl)-yrocatechol), as in the reaction of Example 1. A polarizing film was treated with the obtained melanin in the same way as in Example 1.

[Example 5]

A reaction was carried out, except for replacing 200 g/L of catechol with 179 g/L of DOPA (3-(3,4-dihydroxyphenyl)-α-alanine), as in the reaction of Example 1. A polarizing film was treated with the obtained melanin in the same way as in Example 1.

[Table 2]

Table 2

| Example | Appearance | Degree of polarization (%) | Visible region (%) | UVA (%) | UVB (%) |
|---------|-----------|---------------------------|--------------------|---------|---------|
| 4 | Good | 95.8 | 21.2 | 10.1 | 7.6 |
| 5 | Good | 95.7 | 21.4 | 9.9 | 7.6 |

[Comparative Example 1]

In a 1-L reactor equipped with a stirrer 500 mL of 200 g/L catechol was placed. After the pH was adjusted to 10.0 by adding 100 g/L of sodium hydroxide, 500 g/L of sodium persulfate was supplied at a rate of 7 mL/min. The reaction solution after the supplying reached a pH of 4, and a melanin had already precipitated. It was filtered and dried to give a black melanin. A polarizing film was treated with the obtained melanin in the same way as in Example 1. The examination of the appearance of the obtained polarizing film showed some linear color patches. The degree of polarization was 94.1%. The transmittances for the film in a visible region, the UVA region, and the UVB region, were 23.5%, 8.7%, and 6.8%, respectively.

[Comparative Examples 2 and 3]

Under the same conditions as in Example 1, the melanin of the comparative example was produced twice, and a polarizing film was made using the melanin (Comparative Examples 2 and 3). The results, including Comparative Example 1, are given in Table 3. They had no reproducibility.

[Table 3]

Table 3

| Comparative example | Appearance | Degree of polarization (%) | Visible region (%) | UVA (%) | UVB (%) |
|---|---|---|---|---|---|
| 1 | Some linear color patches | 94.1 | 23.5 | 8.7 | 6.8 |
| 2 | One linear color patch | 92.8 | 28.7 | 6.7 | 6.1 |
| 3 | Some linear color patches | 93.0 | 27.5 | 8.0 | 6.5 |

[Comparative Example 4]

A reaction was carried out, except for replacing 500 mL of 200 g/L catechol with 500 mL of 139 g/L dopamine (4-(2-aminoethyl)-pyrocatechol), as in the reaction of Comparative Example 1. A polarizing film was treated with the obtained melanin in the same way as in Example 1.

[Comparative Example 5]

A reaction was carried out, except for replacing 500 mL of 200 g/L catechol with 500 mL of 179 g/L DOPA (3-(3,4-dihydroxyphenyl)-$\alpha$-alanine), as in the reaction of Comparative Example 1. A polarizing film was treated with the obtained melanin in the same way as in Example 1.

[Table 4]

Table 4

| Comparative example | Appearance | Degree of polarization (%) | Visible region (%) | UVA (%) | UVB (%) |
|---|---|---|---|---|---|
| 4 | Some linear color patches | 93.7 | 24.5 | 8.7 | 6.7 |
| 5 | One linear color patch | 91.8 | 31.3 | 6.7 | 6.0 |

[Examples 6 and 7]

After the melanin obtained in the same way as in Example 1 was dried under a reduced pressure, it was stored under a shielded light and was sealed from the air. After the melanins were stored for three months or six months, each of them was dissolved in an aqueous solution of ammonia (pH 8.3), so that the concentration of the solution was 1.2 g/L. The appearances of the obtained melanins did not differ. The polarizing film that was treated with this solution was measured to be the same as in the result in Example 1. [Table 5]

Table 5

| Example | Appearance | Degree of polarization (%) | Visible region (%) | UVA (%) | UVB (%) |
|---|---|---|---|---|---|
| 6 (for 3 months) | Good | 96.1 | 20.5 | 9.5 | 7.3 |
| 7 (for 6 months) | Good | 96.2 | 20.4 | 9.6 | 7.3 |

[Comparative Examples 6 and 7]

After the melanin obtained in the same way as in Comparative Example 1 was dried, it was dissolved in an aqueous solution of ammonia (pH 8.3), so that the concentration of the solution became 1.2 g/L. One of the obtained melanin solutions was stored for three months and the other for six months. A black precipitation was observed on the surface of the solution after being stored for three months. Many black precipitates were observed on the wall of the vessel for the solution after it was stored for six months. The result that was measured for the polarizing film that was treated with this solution was the same as in Example 1. [Table 6]

Table 6

| Comparative Example | Appearance | Degree of polarization (%) | Visible region (%) | UVA (%) | UVB (%) |
|---|---|---|---|---|---|
| 6 (for 3 months) | A linear color patch | 92.3 | 30.5 | 7.0 | 6.2 |
| 7 (for 6 months) | Remarkable linear color patches | 89.6 | 32.8 | 6.0 | 5.5 |

[Example 8]

In a melanin solution prepared in the same way as in Example 1, a polarizing film was immersed at 30 °C for 30 minutes in a tense state, so that it had no sag. The polarizing film was taken out while the tense state was maintained. Consequently, it was immersed for three minutes in an aqueous solution containing 8 g/L of sodium sulfate. The polarizing film was taken out while the tense state was maintained, and then dried.
The polarizing film was produced under the same conditions as in Example 1.
The appearance of the functional film of the present invention was good. The degree of polarization was 97.3%. The transmittances for the film in a visible region, the UVA region, and the UVB region, were 19.4%, 10.3%, and 8.0%, respectively.

[Examples 9 and 10]

Further, the functional film of the present invention was made twice under the same conditions as in Example 8 (Examples 9 and 10). The results for them are given in Table 7. Also, Table 7 gives the results for Example 8. All results had good reproducibility.
[Table 7]

Table 7

| Example | Appearance | Degree of polarization (%) | Visible region (%) | UVA (%) | UVB (%) |
|---|---|---|---|---|---|
| 8 | Good | 97.3 | 19.4 | 10.3 | 8.0 |
| 9 | Good | 97.3 | 19.3 | 10.2 | 8.0 |
| 10 | Good | 97.1 | 19.7 | 10.0 | 7.8 |

[Comparative Example 8]

In Example 3 of the publication of U.S. Patent No. 4,698,374, the reaction was carried out by replacing DOPA with catechol, as a starting material. The concentrate of the obtained aqueous melanin solution was dissolved in an ammonia-aqueous solution (pH 8.3) so that the concentration became 1.2 g/L. A polarizing film was immersed for three minutes in the melanin solution, adjusted to 30 °C, in a tense state, so that no sag occurred. The polarizing film was taken out while the tense state was maintained, and then dried. The examination of the appearance of the obtained polarizing film showed some linear color patches. The degree of polarization was 94.2%. The transmittances for the film in a visible region, the UVA region, and the UVB region, were 23.1%, 8.8%, and 7.0%, respectively.

[Comparative Examples 9 and 10]

Under the same condition as in Comparative Example 8, two more polarizing films were produced (Comparative Examples 9 and 10). The results for them are given in Table 8. Also, a previous Comparative Example is given in Table 8. No reproducibility was obtained.

[Table 8]

Table 8

| Comparative Example | Appearance | Degree of polarization (%) | Visible region (%) | UVA (%) | UVB (%) |
|---|---|---|---|---|---|
| 8 | Some linear color patches | 94.2 | 23.1 | 8.8 | 7.0 |
| 9 | A linear color patch | 92.8 | 27.3 | 8.0 | 6.4 |
| 10 | Good | 95.1 | 21.5 | 9.5 | 7.5 |

[Industrial Availability]

As above, the melanin of the present invention is improved in its heterogeneity and excellent in reproducibility and stability during its storage. So, the present invention can provide a melanin that is superior in coloring a functional film. Also, the functional film of the present invention is useful for an optical product which contains an improved melanin, and is superior in the property for protecting eyes from ultraviolet rays.

**Claims**

1. A method for producing a melanin under controlled conditions, comprising, at least,
   a step for an oxidative reaction wherein a melanin precursor is continuously oxidized while a mole ratio of the melanin precursor relative to an oxidative agent is maintained at a constant ratio, and
   a step for precipitation wherein a melanin is precipitated by acidifying a reaction solution after the step for an oxidative reaction.

2. The method for producing a melanin of claim 1, wherein the melanin precursor is at least one selected from the group consisting of an eumelanin precursor, a pheomelanin precursor, and an allomelanin precursor.

3. The method for producing a melanin of claim 1 or 2, wherein the oxidative agent is at least one selected from the group consisting of oxygen allotropes, peroxides, and a peroxoic acid and its salts.

4. The method for producing a melanin of claim 1 or 2, wherein the mole ratio of the melanin precursor relative to the oxidative agent in the oxidative reaction is from 1:0.1 to 1:10.

5. The method for producing a melanin of claim 1 or 2, wherein the oxidative reaction is carried out until the amount of the oxidative agent remaining in the reaction becomes 1% or less.

6. The method for producing a melanin of claim 1 or 2, wherein the pH of the oxidative reaction is from 7 to 13.

7. The method for producing a melanin of claim 1 or 2, wherein the temperature of the oxidative reaction is from 10 to 60 °C.

8. The method for producing a melanin of claim 1 or 2, wherein the melanin is precipitated by acidifying the reaction solution at a pH of 0.5 - 4 in the step for precipitation.

9. The method for producing a melanin of claim 1 or 2 which further comprises a step for purification wherein the melanin is washed with a neutral aqueous solution containing an inorganic salt after the melanin precipitated in the step for precipitation is separated from the reaction solution.

10. The method for producing a melanin of claim 9, wherein the concentration of the inorganic salt in the neutral aqueous solution is 1- 20% by weight.

11. The method for producing a melanin of claim 9, wherein in the step for purification the washing with a neutral aqueous solution is carried out until the solution after washing has a pH of 5 or more.

12. The method for producing a melanin of claim 9 which further comprises a step for drying the melanin obtained by the step for purification at a temperature of 80 °C or less.

13. A melanin produced by the method for producing a melanin of any one of claims 1-12.

14. A method for storing melanin wherein the melanin produced by the method for producing a melanin of any one of claims 1 - 12 is stored under a shielded light and is sealed from the air.

15. A functional film which contains the melanin of claim 13.

16. The functional film of claim 15 wherein the film is 10 - 100 pm thick and the content of the melanin in the film is 0.1-1.5% by weight.

17. An optical product which comprises the functional film of claim 15.

18. The optical product of claim 17 which is any one selected from the group consisting of a polarizing lens, a polarizing plate, goggles, glass for an automobile, window glass, and a sun visor.

19. A method for producing a functional film that contains a melanin produced by a method for producing a melanin, comprising, at least,
a step for an oxidative reaction wherein a melanin precursor is continuously oxidized in an alkaline aqueous solution under controlled conditions while a mole ratio of the melanin precursor relative to an oxidative agent is maintained at a constant ratio and a step for precipitation wherein a melanin is precipitated by acidifying a reaction solution after the step for an oxidative reaction, which comprises, at least,
a step for treating the film with an alkaline aqueous solution containing at least the melanin, and
a step for treating the film treated with the aqueous solution with an aqueous solution containing inorganic salts.

20. The method for producing a functional film of claim 19, wherein the melanin precursor is at least one selected from the group consisting of an eumelanin precursor, a pheomelanin precursor, and an allomelanin precursor.

21. The method for producing a functional film of claim 19 or 20, wherein the oxidative agent is at least one selected from the group consisting of oxygen allotropes, peroxides, and a peroxoic acid and its salts.

22. The method for producing a functional film of claim 19 or 20, wherein the mole ratio of the melanin precursor relative to the oxidative agent in the oxidative reaction is from 1:0.1 to 1:10.

23. The method for producing a functional film of claim 19 or 20, wherein the oxidative reaction is carried out until the amount of the oxidative agent remaining in the reaction becomes 1% or less.

24. The method for producing a functional film of claim 19 or 20, wherein the pH of the oxidative reaction is from 7 to 13.

25. The method for producing a functional film of claim 19 or 20, wherein the temperature of the oxidative reaction is from 10 to 60 °C.

26. The method for producing a functional film of claim 19 or 20, wherein the melanin is precipitated by acidifying the reaction solution at a pH of 0.5 - 4 in the step for precipitation.

27. The method for producing a functional film of claim 19 or 20 which further comprises a step for purification wherein the melanin is washed with a neutral aqueous solution containing an inorganic salt after the melanin precipitated in the step for precipitation is separated from the reaction solution.

28. The method for producing a functional film of claim 27, wherein the concentration of the inorganic salt in the neutral aqueous solution is 1- 20 % by weight.

29. The method for producing a functional film of claim 27, wherein in the step for purification the washing with a neutral aqueous solution is carried out until the solution after washing has a pH of 5 or more.

30. The method for producing a functional film of claim 27 which further comprises a step for drying the melanin obtained by the step for purification at a temperature of 80 °C or less.

31. The method for producing a functional film of claim 19, wherein the concentration of the melanin in the alkaline aqueous solution is 0.1 - 6 g/L.

32. The method for producing a functional film of claim 19 or 31, wherein the pH of the alkaline aqueous solution is 7 - 10.

33. The method for producing a functional film of claim 19 or 31, wherein the alkaline aqueous solution is ammonia-alkaline.

34. The method for producing a functional film of claim 19 or 31, wherein the temperature of the alkaline aqueous solution is 10 - 60 °C.

35. The method for producing a functional film of claim 19, wherein the concentration of the inorganic salt is 1- 20 g/L.

36. The method for producing a functional film of claim 19 or 35, wherein the inorganic salt is an alkaline metal salt or an alkaline earth metal salt.

37. The method for producing a functional film of claim 36, wherein the alkaline metal salt is at least any one selected from the group consisting of sodium sulfate, potassium sulfate, sodium chloride, potassium chloride, sodium nitrate, potassium nitrate, sodium phosphate, and potassium phosphate.

38. The method for producing a functional film of claim 36, wherein the alkaline earth metal salt is at least any one selected from the group consisting of calcium sulfate, magnesium sulfate, calcium chloride, magnesium chloride, calcium nitrate, magnesium nitrate, calcium phosphate, and magnesium phosphate.

39. The method for producing a functional film of claim 19 or 31, wherein the film is formed from a poly(vinyl alcohol) resin.

40. The method for producing a functional film of claim 19 or 31, wherein the alkaline aqueous solution further includes a dichroic dye.

41. The method for producing a functional film of claim 19 or 31 which further comprises a step for permeating a dichroic dye in the film.

42. The method for producing a functional film of claim 19 or 31 which comprises a step for further treating the film with a metal compound and boric acid.

43. A functional film which is produced by the method for producing a functional film of claim 19 or 31.

44. An optical product which comprises the functional film of claim 43.

45. The optical product of claim 44 which is selected from the group consisting of a polarizing lens, a polarizing plate, sunglasses, goggles, glass for an automobile, window glass, and a sun visor.

46. A functional film produced by a method for producing a melanin comprising
a step for an oxidative reaction wherein a melanin precursor is continuously oxidized in an alkaline aqueous solution under controlled conditions while a mole ratio of the melanin precursor relative to an oxidative agent is maintained at a constant ratio,
a step for precipitation wherein a melanin is precipitated by acidifying a reaction solution after the step for an oxidative reaction, wherein the film is 10 - 100 $\mu$m thick, the content of the melanin in the film is 0.1 - 1.5% by weight, and the ratio for cutting UVA is 70% or more and the ratio for cutting UVB is 80% or more.

47. The functional film of claim 46, wherein the film has a polarizing property, the ratio for cutting UVA is 80% or more, and the ratio for cutting UVB is 85% or more, and, further, the degree of polarization is 90% or more, and visible light-transmittance is 35% or less.

**Patentansprüche**

1. Verfahren zur Herstellung eines Melanins unter kontrollierten Bedingungen, wobei das Verfahren Folgendes umfasst:

    - mindestens einen Schritt für eine oxidative Reaktion, wobei ein Melaninvorläufer kontinuierlich oxidiert wird, während ein Molverhältnis des Melaninvorläufers relativ zu einem oxidativen Agens auf einem konstanten Verhältnis gehalten wird, und
    - einen Schritt für eine Ausfällung, wobei ein Melanin durch Ansäuern einer Reaktionslösung nach dem Schritt für eine oxidativen Reaktion ausgefällt wird.

2. Verfahren zur Herstellung eines Melanins nach Anspruch 1, wobei der Melaninvorläufer mindestens einer ist, der aus folgender Gruppe ausgewählt ist: ein Eumelaninvorläufer, ein Pheomelaninvorläufer und ein Allomelaninvorläufer.

3. Verfahren zur Herstellung eines Melanins nach Anspruch 1 oder 2, wobei das oxidative Agens mindestens eines ist, das aus folgender Gruppe ausgewählt ist: Sauerstoffallotrope, Peroxide und eine Peroxidsäure und ihre Salze.

4. Verfahren zur Herstellung eines Melanins nach Anspruch 1 oder 2, wobei das Molverhältnis des Melaninvorläufers relativ zu dem oxidativen Agens in der oxidativen Reaktion von 1:0,1 bis 1:10 beträgt.

5. Verfahren zur Herstellung eines Melanins nach Anspruch 1 oder 2, wobei die oxidative Reaktion ausgeführt wird, bis die Menge des oxidativen Agens, das in der Reaktion übrig ist, auf 1 % oder weniger sinkt.

6. Verfahren zur Herstellung eines Melanins nach Anspruch 1 oder 2, wobei der pH-Wert der oxidativen Reaktion von 7 bis 13 beträgt.

7. Verfahren zur Herstellung eines Melanins nach Anspruch 1 oder 2, wobei die Temperatur der oxidativen Reaktion von 10 bis 60 °C beträgt.

8. Verfahren zur Herstellung eines Melanins nach Anspruch 1 oder 2, wobei das Melanin durch Ansäuern der Reaktionslösung bei einem pH-Wert von 0,5-4 in dem Schritt für eine Ausfällung ausgefällt wird.

9. Verfahren zur Herstellung eines Melanins nach Anspruch 1 oder 2, wobei das Verfahren des Weiteren einen Schritt für eine Reinigung umfasst, wobei das Melanin mit einer neutralen wässrigen Lösung gewaschen wird, die ein anorganisches Salz enthält, nachdem das Melanin, das in dem Schritt für eine Ausfällung ausgefällt wurde, aus der Reaktionslösung abgeschieden wurde.

10. Verfahren zur Herstellung eines Melanins nach Anspruch 9, wobei die Konzentration des anorganischen Salzes in der neutralen wässrigen Lösung 1-20 Gewichts-% beträgt.

11. Verfahren zur Herstellung eines Melanins nach Anspruch 9, wobei in dem Schritt für eine Reinigung das Waschen mit einer neutralen wässrigen Lösung ausgeführt wird, bis die Lösung nach dem Waschen einen pH-Wert von 5 oder mehr hat.

12. Verfahren zur Herstellung eines Melanins nach Anspruch 9, wobei das Verfahren des Weiteren einen Schritt zum Trocknen des Melanins, das durch den Schritt für eine Reinigung erhalten wurde, bei einer Temperatur von 80 °C oder weniger umfasst.

13. Melanin, das durch das Verfahren zur Herstellung eines Melanins nach einem der Ansprüche 1-12 hergestellt wird.

14. Verfahren zum Speichern von Melanin, wobei das Melanin, das durch das Verfahren zur Herstellung eines Melanins nach einem der Ansprüche 1-12 hergestellt wird, unter einem abgeschirmten Licht gespeichert und hermetisch verschlossen wird.

15. Funktionaler Film, der das Melanin nach Anspruch 13 enthält.

16. Funktionaler Film nach Anspruch 15, wobei der Film 10-100 $\mu$m dick ist und der Melaningehalt in dem Film 0,1-1,5 Gewichts-% beträgt.

17. Optisches Produkt, das den funktionalen Film nach Anspruch 15 umfasst.

18. Optisches Produkt nach Anspruch 17, das eines ist, das aus folgender Gruppe ausgewählt ist: eine Polarisationslinse, eine Polarisationsplatte, eine Brille, Glas für ein Automobil, Fensterglas und eine Sonnenblende.

19. Verfahren zur Herstellung eines funktionalen Films, der ein Melanin enthält, das durch ein Verfahren zur Herstellung eines Melanins hergestellt wird, wobei das Verfahren Folgendes umfasst:

  - mindestens einen Schritt für eine oxidative Reaktion, wobei ein Melaninvorläufer kontinuierlich in einer wässrigen Alkalilösung unter kontrollierten Bedingungen oxidiert wird, während ein Molverhältnis des Melaninvorläufers relativ zu einem oxidativen Agens auf einem konstanten Verhältnis gehalten wird, und
  - einen Schritt für eine Ausfällung, wobei ein Melanin durch Ansäuern einer Reaktionslösung nach dem Schritt für eine oxidative Reaktion ausgefällt wird,

  das mindestens Folgendes umfasst:

  - einen Schritt für eine Behandlung des Films mit einer wässrigen Alkalilösung, die mindestens das Melanin enthält, und
  - einen Schritt für eine Behandlung des Films, der mit der wässrigen Lösung behandelt wurde, mit einer wässrigen Lösung, die anorganische Salze enthält.

20. Verfahren zur Herstellung eines funktionalen Films nach Anspruch 19, wobei der Melaninvorläufer mindestens einer ist, der aus folgender Gruppe ausgewählt ist: ein Eumelaninvorläufer, ein Pheomelaninvorläufer und ein Allomelaninvorläufer.

21. Verfahren zur Herstellung eines funktionalen Films nach Anspruch 19 oder 20, wobei das oxidative Agens mindestens eines ist, das aus folgender Gruppe ausgewählt ist: Sauerstoffallotrope, Peroxide und eine Peroxidsäure und ihre Salze.

22. Verfahren zur Herstellung eines funktionalen Films nach Anspruch 19 oder 20, wobei das Molverhältnis des Melaninvorläufers relativ zu dem oxidativen Agens in der oxidativen Reaktion von 1:0,1 bis 1:10 beträgt.

23. Verfahren zur Herstellung eines funktionalen Films nach Anspruch 19 oder 20, wobei die oxidative Reaktion ausgeführt wird, bis die Menge des oxidativen Agens, das in der Reaktion übrig ist, auf 1 % oder weniger sinkt.

24. Verfahren zur Herstellung eines funktionalen Films nach Anspruch 19 oder 20, wobei der pH-Wert der oxidativen Reaktion von 7 bis 13 beträgt.

25. Verfahren zur Herstellung eines funktionalen Films nach Anspruch 19 oder 20, wobei die Temperatur der oxidativen Reaktion von 10 bis 60 °C beträgt.

26. Verfahren zur Herstellung eines funktionalen Films nach Anspruch 19 oder 20, wobei das Melanin durch Ansäuern der Reaktionslösung bei einem pH-Wert von 0,5-4 in dem Schritt für eine Ausfällung ausgefällt wird.

27. Verfahren zur Herstellung eines funktionalen Films nach Anspruch 19 oder 20, wobei das Verfahren des Weiteren einen Schritt für eine Reinigung umfasst, wobei das Melanin mit einer neutralen wässrigen Lösung gewaschen wird, die ein anorganisches Salz enthält, nachdem das Melanin, das in dem Schritt für eine Ausfällung ausgefällt wurde, aus der Reaktionslösung abgeschieden wurde.

28. Verfahren zur Herstellung eines funktionalen Films nach Anspruch 27, wobei die Konzentration des anorganischen Salzes in der neutralen wässrigen Lösung 1-20 Gewichts-% beträgt.

29. Verfahren zur Herstellung eines funktionalen Films nach Anspruch 27, wobei in dem Schritt für eine Reinigung das Waschen mit einer neutralen wässrigen Lösung ausgeführt wird, bis die Lösung nach dem Waschen einen pH-Wert von 5 oder mehr hat.

30. Verfahren zur Herstellung eines funktionalen Films nach Anspruch 27, wobei das Verfahren des Weiteren einen Schritt zum Trocknen des Melanins, das durch den Schritt für eine Reinigung erhalten wurde, bei einer Temperatur von 80 °C oder weniger umfasst.

31. Verfahren zur Herstellung eines funktionalen Films nach Anspruch 19, wobei die Konzentration des Melanins in der wässrigen Alkalilösung 0,1-6 g/l beträgt.

32. Verfahren zur Herstellung eines funktionalen Films nach Anspruch 19 oder 31, wobei der pH-Wert der wässrigen Alkalilösung 7-10 beträgt.

33. Verfahren zur Herstellung eines funktionalen Films nach Anspruch 19 oder 31, wobei die wässrige Alkalilösung Ammoniak-Alkali ist.

34. Verfahren zur Herstellung eines funktionalen Films nach Anspruch 19 oder 31, wobei die Temperatur der wässrigen Alkalilösung 10-60 °C beträgt.

35. Verfahren zur Herstellung eines funktionalen Films nach Anspruch 19, wobei die Konzentration des anorganischen Salzes 1-20 g/l beträgt.

36. Verfahren zur Herstellung eines funktionalen Films nach Anspruch 19 oder 35, wobei das anorganische Salz ein Alkalimetallsalz oder ein Erdalkalimetallsalz ist.

37. Verfahren zur Herstellung eines funktionalen Films nach Anspruch 36, wobei das Alkalimetallsalz mindestens eines ist, das aus folgender Gruppe ausgewählt ist: Natriumsulfat, Kaliumsulfat, Natriumchlorid, Kaliumchlorid, Natriumnitrat, Kaliumnitrat, Natriumphosphat und Kaliumphosphat.

38. Verfahren zur Herstellung eines funktionalen Films nach Anspruch 36, wobei das Erdalkalimetallsalz mindestens eines ist, das aus folgender Gruppe ausgewählt ist: Calciumsulfat, Magnesiumsulfat, Calciumchlorid, Magnesiumchlorid, Calciumnitrat, Magnesiumnitrat, Calciumphosphat und Magnesiumphosphat.

39. Verfahren zur Herstellung eines funktionalen Films nach Anspruch 19 oder 31, wobei der Film aus einem Poly (vinylalkohol)harz besteht.

40. Verfahren zur Herstellung eines funktionalen Films nach Anspruch 19 oder 31, wobei die wässrige Alkalilösung des Weiteren einen dichroitischen Farbstoff enthält.

41. Verfahren zur Herstellung eines funktionalen Films nach Anspruch 19 oder 31, wobei das Verfahren des Weiteren einen Schritt für die Permeation eines dichroitischen Farbstoffs in den Film umfasst.

42. Verfahren zur Herstellung eines funktionalen Films nach Anspruch 19 oder 31, das einen Schritt für die weitere Behandlung des Films mit einer Metallverbindung und Borsäure umfasst.

43. Funktionaler Film, der mittels des Verfahrens zur Herstellung eines funktionalen Films nach Anspruch 19 oder 31 hergestellt wird.

44. Optisches Produkt, das den funktionalen Film nach Anspruch 43 umfasst.

45. Optisches Produkt nach Anspruch 44, das aus folgender Gruppe ausgewählt ist: eine Polarisationslinse, eine Polarisationsplatte, eine Sonnenbrille, eine Brille, Glas für ein Automobil, Fensterglas und eine Sonnenblende.

46. Funktionaler Film, der durch ein Verfahren zur Herstellung eines Melanins hergestellt wird, wobei das Verfahren Folgendes umfasst:

- einen Schritt für eine oxidative Reaktion, wobei ein Melaninvorläufer kontinuierlich in einer wässrigen Alkalilösung unter kontrollierten Bedingungen oxidiert wird, während ein Molverhältnis des Melaninvorläufers relativ zu einem oxidativen Agens auf einem konstanten Verhältnis gehalten wird,
- einen Schritt für eine Ausfällung, wobei ein Melanin durch Ansäuern einer Reaktionslösung nach dem Schritt für eine oxidative Reaktion ausgefällt wird,

wobei der Film 10-100 $\mu$m dick ist, der Melaningehalt in dem Film 0,1-1,5 Gewichts-% beträgt und das Verhältnis zum Beenden von UVA beträgt 70 % oder mehr und das Verhältnis zum Sperren von UVB 80 % oder mehr beträgt.

47. Funktionaler Film nach Anspruch 46, wobei der Film eine Polarisationseigenschaft besitzt, das Verhältnis zum Sperren von UVA 80 % oder mehr beträgt und das Verhältnis zum Sperren von UVB 85 % oder mehr beträgt, und des Weiteren der Polarisationsgrad 90 % oder mehr beträgt und die Durchlässigkeit für sichtbares Licht 35 % oder weniger beträgt.

**Revendications**

1. Procédé de production d'une mélanine dans des conditions contrôlées, comprenant, au moins,

   - une étape pour une réaction oxydative dans laquelle un précurseur de mélanine est oxydé en continu alors qu'un rapport molaire du précurseur de mélanine relativement à un agent oxydant est maintenu à un rapport constant, et
   - une étape pour la précipitation dans laquelle une mélanine est précipitée en acidifiant une solution de réaction après l'étape pour une réaction oxydative.

2. Procédé pour produire une mélanine selon la revendication 1, dans lequel le précurseur de mélanine est au moins un choisi dans le groupe constitué par un précurseur d'eumélanine, un précurseur de phéomélanine et un précurseur d'allomélanine.

3. Procédé pour produire une mélanine selon la revendication 1 ou 2, dans lequel l'agent oxydant est au moins un choisi dans le groupe constitué par les allotropes de l'oxygène, les peroxydes et un acide peroxoïque et ses sels.

4. Procédé de production d'une mélanine selon la revendication 1 ou 2, dans lequel le rapport molaire du précurseur de mélanine relativement à l'agent oxydant dans la réaction oxydative est de 1 : 0,1 à 1 : 10.

5. Procédé de production d'une mélanine selon la revendication 1 ou 2, dans lequel la réaction oxydative est réalisée jusqu'à ce que la quantité d'agent oxydant restant dans la réaction devienne de 1 % ou moins.

6. Procédé de production d'une mélanine selon la revendication 1 ou 2, dans lequel le pH de la réaction oxydative est de 7 à 13.

7. Procédé de production d'une mélanine selon la revendication 1 ou 2, dans lequel la température de la réaction oxydative est de 10 à 60°C.

8. Procédé de production d'une mélanine selon la revendication 1 ou 2, dans lequel la mélanine est précipitée par acidification de la solution de réaction à un pH de 0,5 à 4 dans l'étape pour la précipitation.

9. Procédé de production d'une mélanine selon la revendication 1 ou 2 qui comprend en outre un étape pour la purification dans laquelle la mélanine est lavée avec une solution aqueuse neutre contenant un sel inorganique après que la mélanine précipitée dans l'étape pour la précipitation ait été séparée de la solution de réaction.

10. Procédé pour produire une mélanine selon la revendication 9, dans lequel la concentration du sel inorganique dans la solution aqueuse neutre est de 1 à 20 % en poids.

11. Procédé pour la production d'une mélanine selon la revendication 9, dans lequel dans l'étape pour la purification le lavage avec une solution aqueuse neutre est réalisé jusqu'à ce que la solution après le lavage ait un pH de 5 ou plus.

12. Procédé pour produire une mélanine selon la revendication 9 qui comprend en outre une étape pour sécher la mélanine obtenue par l'étape pour la purification à une température de 80 °C ou moins.

13. Mélanine produite par le procédé pour produire une mélanine selon l'une quelconque des revendications 1 à 12.

14. Procédé pour stocker la mélanine dans lequel la mélanine produite par le procédé pour produire une mélanine selon l'une quelconque des revendications 1 à 12 est stockée sous une lumière protégée et est fermée hermétiquement à l'air.

**15.** Film fonctionnel qui contient la mélanine selon la revendication 13.

**16.** Film fonctionnel selon la revendication 15 dans lequel le film est de 10 à 100 $\mu$m d'épaisseur et le contenu de la mélanine dans le film est de 0,1 à 1,5 % en poids.

**17.** Produit optique qui comprend le film fonctionnel selon la revendication 15.

**18.** Produit optique selon la revendication 17 qui est l'un quelconque choisi dans le groupe constitué par une lentille polarisante, une plaque polarisante, des lunettes de protection, du verre pour une automobile, du verre de vitre et un pare-soleil.

**19.** Procédé pour produire un film fonctionnel qui contient une mélanine produite par un procédé pour produire une mélanine, comprenant, au moins,

   - une étape pour une réaction oxydative dans laquelle un précurseur de mélanine est oxydé en continu dans une solution aqueuse alcaline dans des conditions contrôlées alors qu'un rapport molaire du précurseur de mélanine relativement à un agent oxydant est maintenu à un rapport constant et
   - une étape pour la précipitation dans laquelle une mélanine est précipitée par l'acidification d'une solution de réaction après l'étape pour une réaction oxydative,

qui comprend, au moins,

   - une étape pour traiter le film avec une solution aqueuse alcaline contenant au moins la mélanine, et
   - une étape pour traiter le film traité avec la solution aqueuse avec une solution aqueuse contenant des sels inorganiques.

**20.** Procédé pour produire un film fonctionnel selon la revendication 19, dans lequel le précurseur de mélanine est au moins un choisi dans le groupe constitué par un précurseur d'eumélanine, un précurseur de phéomélanine et un précurseur d'allomélanine.

**21.** Procédé pour produire un film fonctionnel selon la revendication 19 ou 20, dans lequel l'agent oxydant est au moins un choisi dans le groupe constitué par les allotropes d'oxygène, les peroxydes et un acide peroxoïque et ses sels.

**22.** Procédé pour produire un film fonctionnel selon la revendication 19 ou 20, dans lequel le rapport molaire du précurseur de mélanine relativement à l'agent oxydant dans la réaction oxydative est de 1 : 0,1 à 1 : 10.

**23.** Procédé pour produire un film fonctionnel selon la revendication 19 ou 20, dans lequel la réaction oxydative est réalisée jusqu'à ce que la quantité de l'agent oxydant restant dans la réaction devienne de 1 % ou moins.

**24.** Procédé pour produire un film fonctionnel selon la revendication 19 ou 20, dans lequel le pH de la réaction oxydative est de 7 à 13.

**25.** Procédé pour produire un film fonctionnel selon la revendication 19 ou 20, dans lequel la température de la réaction oxydative est de 10 à 60 °C.

**26.** Procédé pour produire un film fonctionnel selon la revendication 19 ou 20, dans lequel la mélanine est précipitée en acidifiant la solution de réaction d'un pH de 0,5 à 4 dans l'étape pour la précipitation.

**27.** Procédé pour produire un film fonctionnel selon la revendication 19 ou 20 qui comprend en outre une étape pour la purification dans laquelle la mélanine est lavée avec une solution aqueuse neutre contenant un sel inorganique après que la mélanine précipitée dans l'étape pour la précipitation ait été séparée de la solution de réaction.

**28.** Procédé pour produire un film fonctionnel selon la revendication 27, dans lequel la concentration du sel inorganique dans la solution aqueuse neutre est de 1 à 20 % en poids.

**29.** Procédé pour produire un film fonctionnel selon la revendication 27, dans lequel dans l'étape pour la purification le lavage avec une solution aqueuse neutre est réalisé jusqu'à ce que la solution après le lavage ait un pH de 5 ou plus.

**30.** Procédé pour produire un film fonctionnel selon la revendication 27 qui comprend en outre une étape pour sécher la mélanine obtenue par l'étape pour la purification à une température de 80 °C ou moins.

**31.** Procédé pour produire un film fonctionnel selon la revendication 19, dans lequel la concentration de la mélanine dans la solution aqueuse alcaline est de 0,1 à 6 g/l.

**32.** Procédé pour produire un film fonctionnel selon la revendication 19 ou 31, dans lequel le pH de la solution alcaline est de 7 à 10.

**33.** Procédé pour produire un film fonctionnel selon la revendication 19 ou 31, dans lequel la solution aqueuse alcaline est l'ammoniaque alcaline.

**34.** Procédé pour produire un film fonctionnel selon la revendication 19 ou 31, dans lequel la température de la solution aqueuse alcaline est de 10 à 60 °C.

**35.** Procédé pour produire un film fonctionnel selon la revendication 19, dans lequel la concentration du sel inorganique est de 1 à 20 g/l.

**36.** Procédé pour produire un film fonctionnel selon la revendication 19 ou 35, dans lequel le sel inorganique est un sel métallique alcalin ou un sel métallique alcalino-terreux.

**37.** Procédé pour produire un film fonctionnel selon la revendication 36, dans lequel le sel métallique alcalin est au moins l'un quelconque choisi dans le groupe constitué par le sulfate de sodium, le sulfate de potassium, le chlorure de sodium, le chlorure de potassium, le nitrate de sodium, le nitrate de potassium, le phosphate de sodium et le phosphate de potassium.

**38.** Procédé pour produire un film fonctionnel selon la revendication 36, dans lequel le sel métallique alcalino-terreux est au moins l'un quelconque choisi dans le groupe constitué par le sulfate de calcium, le sulfate de magnésium, le chlorure de calcium, le chlorure de magnésium, le nitrate de calcium, le nitrate de magnésium, le phosphate de calcium et le phosphate de magnésium.

**39.** Procédé pour produire un film fonctionnel selon la revendication 19 ou 31, dans lequel le film est formé d'une résine de poly(alcool vinylique).

**40.** Procédé pour produire un film fonctionnel selon la revendication 19 ou 31, dans lequel la solution aqueuse alcaline comprend en outre un colorant dichroïque.

**41.** Procédé pour produire un film fonctionnel selon la revendication 19 ou 31 qui comprend en outre une étape pour la pénétration d'un colorant dichroïque dans le film.

**42.** Procédé pour produire un film fonctionnel selon la revendication 19 ou 31 qui comprend une étape pour traiter encore le film avec un composé métallique et de l'acide borique.

**43.** Film fonctionnel qui est produit par le procédé pour produire un film fonctionnel selon la revendication 19 ou 31.

**44.** Produit optique qui comprend le film fonctionnel selon la revendication 43.

**45.** Produit optique selon la revendication 44 qui est choisi dans le groupe constitué par une lentille polarisante une plaque polarisante, des lunettes de soleil, des lunettes de protection, du verre pour une automobile, du verre pour une vitre et un pare-soleil.

**46.** Film fonctionnel produit par un procédé pour produire une mélanine comprenant

- une étape pour une réaction oxydative dans laquelle un précurseur de mélanine est oxydé en continu dans une solution aqueuse alcaline dans des conditions contrôlées alors qu'un rapport molaire du précurseur de mélanine relativement à un agent oxydant est maintenu à un rapport constant,
- une étape pour la précipitation dans laquelle une mélanine est précipitée en acidifiant une solution de réaction après l'étape pour une réaction oxydative,

dans lequel le film est de 10 à 100 $\mu$m d'épaisseur, le contenu de la mélanine dans le film est de 0,1 à 1,5 % en poids, et le rapport pour réduire les UVA est de 70 % ou plus et le rapport pour réduire les UVB est de 80 % ou plus.

47. Film fonctionnel selon la revendication 46, dans lequel le film a une propriété polarisante, le rapport pour réduire les UVA est de 80 % ou plus, et le rapport pour réduire les UVB est de 85 % ou plus, et, en outre, le degré de polarisation est de 90 % ou plus, et le facteur de transmission de la lumière visible est de 35 % ou moins.

## REFERENCES CITED IN THE DESCRIPTION

**Patent documents cited in the description**

- JP H08500371 B
- JP 2002533516 A
- WO 2005026216 A

- JP 2663440 B
- US 4698374 A

**Non-patent literature cited in the description**

- **S. MOBELLI et al.** *The 12th International Conference on Pigment Cells,* 1985, 69-77

- **R. A. NICOLAUS.** Melanins. Hermann Publishing, 1968